(19) Europäisches Patentamt
European Patent Office
Office européen des brevets

(11) **EP 3 543 682 B1**

(12) **EUROPÄISCHE PATENTSCHRIFT**

(45) Veröffentlichungstag und Bekanntmachung des Hinweises auf die Patenterteilung:
**29.04.2020 Patentblatt 2020/18**

(51) Int Cl.:
***G01N 21/39*** *(2006.01)*     ***G01J 3/433*** *(2006.01)*

(21) Anmeldenummer: **18163424.7**

(22) Anmeldetag: **22.03.2018**

(54) **VERFAHREN ZUM BETREIBEN EINES OPTISCHEN MESSSYSTEMS ZUR MESSUNG DER KONZENTRATION EINER GASKOMPONENTE IN EINEM MESSGAS**

METHOD OF OPERATING AN OPTICAL MEASURING SYSTEM FOR MEASURING THE CONCENTRATION OF A GAS COMPONENT IN A GAS TO BE MEASURED

PROCÉDÉ DE FONCTIONNEMENT D'UN SYSTÈME DE MESURE OPTIQUE PERMETTANT DE MESURER LA CONCENTRATION D'UN COMPOSANT DE GAZ DANS UN GAZ DE MESURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**25.09.2019 Patentblatt 2019/39**

(73) Patentinhaber: **Axetris AG**
**6056 Kägiswil (CH)**

(72) Erfinder:
• **WITTMANN, Andreas**
**6074 Giswil (CH)**
• **SCHLESINGER, Sven**
**6072 Sachseln (CH)**
• **PLATZ, Torsten**
**6353 Weggis (CH)**

(74) Vertreter: **Klocke, Peter**
**ABACUS**
**Patentanwälte**
**Lise-Meitner-Strasse 21**
**72202 Nagold (DE)**

(56) Entgegenhaltungen:
EP-A1- 2 848 918     DE-A1- 4 110 095
DE-A1-102013 202 289

EP 3 543 682 B1

**Beschreibung**

Die Erfindung betrifft ein Verfahren zum Betreiben eines optischen Messsystems zur Messung der Konzentration einer Gaskomponente in einem Messgas, basierend auf der Wellenlängen-Modulationsspektroskopie, mit einer wellenlängenabstimmbaren temperaturstabilisierten Laserlichtquelle, welche eine zentrale Basiswellenlänge $\lambda_0$ des Laserlichts der Laserlichtquelle periodisch durch Änderung des Grundstroms über eine interessierende Absorptionslinie der Gaskomponente an einem Arbeitspunkt variiert und gleichzeitig mit einer Frequenz (f) und einer bestimmbaren Amplitude mittels einer Modulationseinrichtung moduliert, einem Lichtdetektor, der die Intensität des Laserlichtes nach dem Durchtritt durch das Messgas detektiert, und mit einer Auswerteeinrichtung, die Mittel zur phasensensitiven Demodulation eines von dem Lichtdetektor erzeugten Messsignals bei der Frequenz (f) und/oder einer ihrer Harmonischen enthält, wobei die Laserlichtquelle mit einem Grundstrom $I_{DC}$ und einem Modulationsstrom $I_{AC}$ strommoduliert betrieben wird und einen Laserstrahl der Wellenlänge $\lambda_0$ mit einer Wellenlängen-Modulationsamplitude $\Delta\lambda_{AC}$ emittiert und die Wellenlängen-Modulationsamplitude $\Delta\lambda_{AC}$ des Laserlichtes über eine variable Einstellung der Strom-Modulationsamplitude $\Delta I_{AC}$ konstant gehalten wird.

Optische Messsysteme zur Messung der Konzentration einer Gaskomponente in einem Messgas, basierend auf der Wellenlängenmodulationsspektroskopie, sind aus dem Stand der Technik in vielfältigen Ausführungsformen bekannt, ebenso eine Vielzahl von unterschiedlichen Verfahren zum Betreiben eines solchen optischen Messsystems.

In der Tunable Laser Absorption Spektroskopie (TLAS), insbesondere der Wellenlängen-Modulations-Spektroskopie (WMS), spielt generell die Wellenlängen-Modulationsamplitude eine wichtige Rolle. Diese wird über die Einstellung der Strom-Modulationsamplitude bei der Kalibrierung für den Arbeitspunkt definiert. Veränderungen des Arbeitspunktes bzw. Langzeit-Veränderungen des die Veränderung der Wellenlängen-Modulationsamplitude auch dazu, dass die Sensor-Kalibrierung aus den Spezifikationsgrenzen läuft, was dann oft eine Neukalibrierung des optischen Messsystems erforderlich macht.

Aus der DE 41 10 095 A1 ist ein Verfahren zur gasspektroskopischen Messung mit einer mit modelliertem Steuerstrom betriebenen Laserdiode, einer Monitordiode, einer Detektoreinrichtung zur Aufnahme eines Messsignals der transmittierten Strahlung und einem Lock-In-Verstärker bekannt, bei dem der Offset-Anteil im Ausgangssignal des Lock-In-Verstärkers eliminiert werden soll. Dies wird dadurch erreicht, dass die optische Strahlungsleistung der Laserdiode mit der Monitordiode als Istwertgeber auf ein vorgegebenes Modulationsprofil geregelt wird. Dort wird das optische Ausgangsleistungsprofil konstant gehalten, was jedoch nicht bedeutet, dass daraus auch automatisch auch immer das gleiche Wellenlängen-Modulations-Profil resultiert. Eine konstante optische Leistungsmodulation hat nicht automatisch eine konstante Wellenlängenmodulation zur Folge.

Zur Ansteuerung einer Wellenlängen durchstimmbaren Laserdiode in einem Spektrometer wird gemäß DE 10 2013 202 289 A1 anstelle einer Strom-Zeit-Funktion eine Leistungs-Zeit-Funktion vorgegeben, entsprechend der die Laserdiode periodisch über einen Wellenlängenbereich durchgestimmt wird. Dazu wird aus der Leistungs-Zeit-Funktion und Messwerten der an der Laserdiode anliegenden Spannung ein Stromverlauf ermittelt, mit dem die Laserdiode angesteuert wird. Hier wird die elektrische Leistung gemessen, jedoch handelt es sich dabei um die gesamte Laserleistung einschließlich der Spannung über die ideale Diode. Dieses Verfahren ist bei bestimmten Anwendungen zu ungenau.

Die EP 2 848 918 A1 beschreibt einen Gasanalysator zur Messung der Konzentration einer Gaskomponente in einem Messgas basierend auf dem Verfahren der Wellenlängenmodulationsspektroskopie. Die Besonderheit darin, dass ein Referenzdetektor oder ein Messdetektor in Abhängigkeit von dessen demoliertem Ausgangssignal die Modulationsintensität gesteuert wird und eine Recheneinrichtung vorhanden ist, die ein Modellsignal für das demolierte Messsignal oder Referenzsignal erzeugt, ein Differenzsignal zwischen dem Modellsignal und dem demodulierten Messsignal oder Referenzsignal bildet und die Modulationsintensität mit dem Differenzsignal steuert. Diese Druckschrift beschreibt somit ein System zur kontinuierlichen Selbstkalibration und Nullpunktskorrektur, wobei ein Wellenlängenmodulationshub nicht geregelt wird.

Es ist bei gattungsgemäßen optischen Messsystemen bekannt, bei Lasers führen jedoch dazu, dass (trotz unveränderter Strommodulations-Amplitude) sich die Wellenlängen-Modulationsamplitude ändert. Als Folge führt

Veränderungen des Arbeitspunktes bzw. bei Langzeit-Veränderungen der Laserlichtquelle gegenüber dem Kalibrierungszeitpunkt zur Stabilisierung der Sensorgenauigkeit, die Wellenlängen-Modulationsamplitude während des Betriebes neu einzustellen, indem die Intensität des Modulationsstromes für die Laserlichtquelle, d.h. die Strom-Modulationsamplitude derart angepasst wird, dass die Wellenlängen-Modulationsamplitude wieder zumindest annähernd dem Kalibrierungszeitpunkt entspricht. Beispielhaft wird diesbezüglich auf die Druckschrift EP 2 610 608 B1 verwiesen.

Die Schrift EP 2 610 608 B1 offenbart eine Gasmessvorrichtung zum Messen eines Zielgases und ein Verfahren zur Einstellung einer Breite einer Wellenlängenmodulation der Gasmessvorrichtung, mit einer Lichtquelle und einer Detektionseinheit durch Oszillieren einer Wellenlänge eines Laserlichts von der Quelle, um eine durch einen Hauptstrom bestimmte zentrale Wellenlänge zu haben und gemäß einem Modulationsstrom bei einer Oszillationsfrequenz und mit einer Breite einer Wellenlängenmodulation moduliert zu werden, während die zentrale Wellenlänge variiert wird, indem der Hauptstrom mit einem längeren Zyklus als demjenigen des Modulationsstroms geändert wird, wodurch die Detektionseinheit ein Signal gemäß einer Intensität des durch ein Standardgas transmittierten Laserlichts abgibt. Das Verfahren weist ferner das Erhalten eines Detektionssignals auf, indem das durch die Standardprobe transmittierte Laserlicht detektiert wird, während die zentrale Wellenlänge variiert wird, das Erhalten einer spezifischen Frequenzkomponente des Detektionssignals, das bei einer Frequenz oszilliert, die ein positives ganzzahlig Vielfaches einer Oszillationsfrequenz des Modulationsstroms ist, und das Berechnen eines Verhältnisses einer Größe eines lokalen Minimums der spezifischen Frequenzkomponente bezüglich der zentralen Wellenlänge des Laserlichts und einer Größe eines lokalen Maximums der spezifischen Frequenzkomponente bezüglich der zentralen Wellenlänge des Laserlichts, sowie das Einstellen der Breite der Wellenlängenmodulation des Laserlichts, so dass das Verhältnis eine vorbestimmte Bedingung erfüllt. Dies ist eine Bedingung, bei der das Verhältnis, das der Breite der Wellenlängenmodulation eins zu eins entspricht, einem vorbestimmten Zielwert gleichkommt. Beim Einstellen der Modulationsbreite des Laserlichts wird die Breite der Wellenlängenmodulation eingestellt, indem eine Intensität des Modulationsstroms angepasst wird.

Davon ausgehend liegt der beanspruchten Erfindung die Aufgabe zugrunde, eine andere einfachere und genauere Möglichkeit vorzuschlagen, die Wellenlängen-Modulationsamplitude trotz sich ändernder Lasereigenschaften, wie z.B. Temperatur, Betriebsstrom, Langzeitdrift, konstant zu halten.

Diese Aufgabe wird erfindungsgemäß durch ein Verfahren zum Betreiben eines optischen Messsystems zur Messung der Konzentration einer Gaskomponente in einem Messgas, basierend auf der Wellenlängen-Modulations-Spektroskopie, mit den Merkmalen des unabhängigen Patentanspruchs 1 gelöst. Weitere vorteilhafte Ausführungsformen sind den rückbezogenen Ansprüchen zu entnehmen.

Bei optischen Messsystemen zur Messung der Konzentration einer Gaskomponente in einem Messgas, basierend auf der Wellenlängen-Modulations-spektroskopie ist die Wellenlängen-Modulationsamplitude $\Delta\lambda_{AC}$ der entscheidende Parameter, der während der Kalibrierung des Sensors über die Strommodulations-Amplitude $\Delta I_{AC}$ für den gewählten Arbeitspunkt $I_{DC}$ eingestellt wird. Abweichungen vom Arbeitspunkt, z.B. durch Veränderung der Außentemperatur relativ zur Kalibrierungstemperatur bzw. durch Wellenlängen-Drift durch Alterung des Lasers führen jedoch dazu, dass sich die Wellenlängen-Modulationsamplitude ändert. Als Folge reduziert sich die Sensorgenauigkeit und es bedarf unter Umständen einer Neukalibrierung.

Der Erfindung liegt der Kerngedanke zugrunde, beim Betrieb des Messsystems beim vorgesehenen Arbeitspunkt die Wellenlängen-Modulationsamplitude $\Delta\lambda_{AC}$ des Laserlichtes unter Verwendung von zum Zeitpunkt der Kalibrierung der Laserlichtquelle, vorzugsweise einer Laserdiode, für den Arbeitspunkt eingestellten, dann erfassten und abgespeicherten Betriebsparametern und von im Betrieb gemessenen Spannungen und/oder Strömen an der Laserlichtquelle zu stabilisieren. Bei der Entwicklung des neuen Verfahrens hat sich herausgestellt, dass die Wellenlängen-Modulationsamplitude $\Delta\lambda_{AC}$ proportional zu der modulierten AC - Leistung $\Delta P_{AC}$ ist.

$$\Delta P_{AC} \sim \Delta\lambda_{AC} \quad \text{(Formel 1)}$$

Erfindungsgemäß wird demnach die Wellenlängen-Modulationsamplitude $\Delta\lambda_{AC}$ des Laserlichtes über eine variable Einstellung der Strom-Modulationsamplitude $\Delta I_{AC}$ konstant gehalten, indem am Arbeitspunkt eine modulierte Leistung $\Delta P_{AC}$ des Laserlichtes an einem Innenwiderstand $R_I$ der Laserlichtquelle konstant gehalten wird. Dazu wird unter anderem die Spannung an der Laserlichtquelle gemessen.

Es ist allgemein bekannt, dass jedes Laserlichtquellen-Schaltbild durch ein Ersatzschaltbild ersetzt werden kann, das einen Laseremitter (aktive Zone) und einen dazu in Serie geschalteten Innenwiderstand $R_I$ umfasst. Sobald durch die Laserlichtquelle ein mit einem Modulationsstrom $I_{AC}$ modulierter Grundstrom $I_{DC}$ fließt, liegt an der Laserlichtquelle eine Spannung $U_L$ an, die zum Teil am Laseremitter als Teilspannung $U_E$ und an dem Innenwiderstand Ri als Teilspannung $U_{Ri}$ abfällt.

Für die Berechnung der modulierten Leistung ist nicht die Spannung über dem Laser $U_L$ relevant, sondern nur die über dem Innenwiderstand $R_I$ abgefallene Spannung $U_{Ri}$. Die Leistungs-Modulationsamplitude $\Delta P_{AC}$ errechnet sich wie folgt:

$$\Delta P_{AC} = \Delta I_{AC} \cdot U_{Ri} = \Delta I_{AC} \cdot R_I \cdot I_{DC} \quad \text{(Formel 2)}$$

Wobei $\Delta I_{AC}$ die Strom-Modulationsamplitude bezeichnet und $U_{Ri}$ die am Innenwiderstand abgefallene Spannung darstellt. Alternativ kann die Spannung auch über den Wert des Innenwiderstandes $R_I$ und den durch diesen fließenden DC-Laserstroms $I_{DC}$ berechnet werden.

Die DC-Spannung über dem Innenwiderstand Ri ergibt sich zu

$$U_{Ri} = U_L - U_E \quad \text{(Formel 3)}$$

wobei $U_E$ je nach Lasertyp (mit Telekom-naher Wellenlänge) einen Wert von 0.9-1.1 V aufweist.

Allgemein ist festzustellen, dass beim Betrieb des optischen Messsystems in einer nicht-thermostabilisierten Umgebung eine Veränderung der Umgebungstemperatur dazu führt, dass die Laserlichtquelle des Sensors eine leicht höhere oder niedrigere Temperatur annimmt. Somit verschiebt sich die Zielwellenlänge des Sensors zu einem niedrigerem bzw. höherem DC-Laserstrom $I_{DC}$. Als Folge davon ändert sich auch die Leistungs-Modulationsamplitude $\Delta P_{AC}$ gemäß Formel 2. Als Konsequenz dieser Leistungs-Modulationsamplituden-Veränderung ändert sich nach der Formel 1 folglich auch die Wellenlängen-Modulationsamplitude $\Delta\lambda_{AC}$.

Selbst bei konstantem DC-Laserstrom $I_{DC}$ kann sich die Leistungs-Modulationsamplitude $\Delta P_{AC}$ verändern, wenn sich der Innenwiderstand $R_I$ der Laserlichtquelle aufgrund verschiedener (Langzeit-)Einflüsse während des Betriebs verändert.

Um nun sicherzustellen, dass die Laserlichtquelle zu jedem Zeitpunkt mit gleicher Wellenlängen-Modulationsamplitude $\Delta\lambda_{AC}$ betrieben wird, wird erfindungsgemäß die aktuelle Leistungs-Modulationsamplitude $\Delta P_{AC\_Act}$ gleich der Leistungs-Modulationsamplitude $\Delta P_{AC\_Calib}$ zum Zeitpunkt der Kalibrierung des optischen Messsystems gehalten.

$$\Delta P_{AC\_Act} = \Delta P_{AC\_Calib} \quad \text{(Formel 4)}$$

Setzt man Formel 2 in Formel 4 ein und löst dann nach der aktuellen Strom-Modulationsamplitude $\Delta I_{AC\_Act}$ auf, so ergibt sich

$$\Delta I_{AC\_Act} = \Delta I_{AC\_Calib} \cdot U_{Ri\_Calib} / U_{Ri\_Act} \quad \text{(Formel 5)}$$

wobei die kalibrierten Werte gegenüber den aktuellen Spannungs-Werten ins Verhältnis gesetzt werden. Die Formel 5 ist noch weiter auflösbar. Die Spannung $U_{Ri}$ am Innenwiderstand Ri kann nach der Formel 3 als $U_L - U_E$ dargestellt werden.

Bei einer bevorzugten Ausführungsform des erfindungsgemäßen Verfahrens wird entsprechend die Strom-Modulationsamplitude $\Delta I_{AC}$ unter Berücksichtigung einer bei der Kalibrierung der Laserlichtquelle eingestellten Strom-Modulationsamplitude $\Delta I_{AC\_Calib}$ derart angepasst, dass die modulierte Leistungs-Modulationsamplitude $\Delta P_{AC}$ konstant gehalten wird.

Vorzugsweise wird bei einer vorteilhaften Ausführungsform der Erfindung zur Stabilisierung der Wellenlängen-Modulationsamplitude $\Delta\lambda_{AC}$ durch Anpassung der Strom-Modulationsamplitude $\Delta I_{AC}$ die Spannungsänderung $\Delta U_{Ri}$ an dem Innenwiderstand $R_I$ der Laserlichtquelle bestimmt, wobei der Anpassung der Strom-Modulationsamplitude $\Delta I_{AC}$ der Quotient aus $U_{L\_Calib}$ und $U_{L\_Act}$ zugrunde gelegt wird.

Vorteilhafterweise wird bei einer besonders günstigen Variante des erfindungsgemäßen Verfahrens der Innenwiderstand Ri der Laserlichtquelle aus einer Spannung/Strom-Kennlinie der Laserlichtquelle bestimmt, bei der der Spannungsabfall $U_L$ an der Laserlichtquelle abhängig von dem Grundstrom $I_{DC}$ aufgenommen ist. Die Spannung/Strom-Kennlinie der Laserlichtquelle wird üblicherweise erstmals bei der Kalibrierung des optischen Messsystems aufgenommen. Dies kann später bei Bedarf wiederholt werden, beispielsweise bei einer erneuten Kalibrierung oder zur Kontrolle während des normalen Betriebes.

Bei einer Ausführungsform der Erfindung wird bei der Kalibrierung des optischen Messsystems zumindest die modulierte Leistung $\Delta P_{AC}$ der Laserlichtquelle ermittelt. Anstatt der Leistung $\Delta P_{AC}$ kann auch die Amplitude $\Delta I_{AC}$ des Modulationsstroms $I_{AC}$ und der Spannungsabfall $U_I$ am Innenwiderstand $R_I$, herangezogen werden. Alternativ kann auch die Amplitude $\Delta I_{AC}$ des Modulationsstroms $I_{AC}$, der Innenwiderstand $R_I$ und der Grundstrom $I_{DC}$ am Arbeitspunkt ermittelt werden. Die ermittelten jeweiligen Parameter werden zum Zeitpunkt der Kalibrierung abgespeichert. Der Grundstrom $I_{DC}$ bestimmt den Arbeitspunkt des optischen Messsystems. Dies ermöglicht im laufenden Betrieb auf einfache Weise diesbezügliche Abweichungen zu erkennen und entsprechend dem vorstehenden beschriebenen Verfahren darauf zu reagieren.

Das zur Durchführung des erfindungsgemäßen Verfahrens verwendete optische Messsystem zur Messung der Konzentration einer Gaskomponente in einem Messgas, basierend auf der Wellenlängen-Modulationsspektroskopie, weist eine wellenlängenabstimmbare temperaturstabilisierte Laserlichtquelle, vorzugsweise eine Halbleiterlaserlichtquelle in Form einer Laserdiode, welche eine zentrale Basiswellenlänge $\lambda_0$ des Laserlichts der Laserlichtquelle periodisch über eine interessierende Absorptionslinie der Gaskomponente an einem Arbeitspunkt, beispielsweise rampenförmig (Sägezahn), variiert und gleichzeitig mit einer Frequenz (f) und einer Amplitude mittels einer Modulationseinrichtung moduliert. Das Messsystem weist außerdem einen Lichtdetektor, der die Intensität des Laserlichtes nach dem Durchtritt durch das Messgas detektiert, und eine Auswerteeinrichtung, die Mittel zur phasensensitiven Demodulation eines von dem Lichtdetektor erzeugten Messsignals bei der Frequenz (f) und/oder einer ihrer Harmonischen enthält, auf. Die Modulation kann beispielsweise sinusförmig oder dreiecksförmig sein. Die Laserlichtquelle wird mit einem Grundstrom $I_{DC}$ und einem Modulationsstrom $I_{AC}$ strommoduliert betrieben und emittiert einen Laserstrahl der Wellenlänge $\lambda_0$ mit einer Wellenlängen-Modulationsamplitude $\Delta\lambda_{AC}$. Dabei wird die Wellenlängen-Modulationsamplitude $\Delta\lambda_{AC}$ des Laserlichtes über eine variable Einstellung der Strom-Modulationsamplitude $\Delta I_{AC}$ von der Auswerteeinrichtung in Verbindung mit der Modulationseinrichtung konstant gehalten.

Hierbei wird bei der Kalibrierung und im regulären Betrieb des optischen Messsystems zur Konzentrationsbestimmung einer Gaskomponente vorzugsweise eine Auswerteeinrichtung mit Lock-in-Technik verwendet, um in bekannter Art und Weise eine Rauschreduzierung zu erreichen, um insbesondere das vom 1/f-Signal bedingte Rauschen deutlich zu mindern. Der Aufbau und die Funktionsweise eines Lock-in-Verstärkers sind dem Fachmann allgemein vertraut, so dass eine umfassende Beschreibung nicht von Nöten ist. Kurz zusammengefasst handelt es sich bei einem Lock-in-Verstärker, der auch manchmal als phasenempfindlicher Gleichrichter oder Trägerfrequenzverstärker bezeichnet wird, um einen Verstärker zur Messung eines schwachen elektrischen Wechselsignals, das mit einem in Frequenz und Phase bekannten Referenzsignal moduliert ist. Das Gerät stellt einen extrem schmalbandigen Bandpassfilter dar und verbessert dadurch das Signal-Rausch-Verhältnis. Der Vorteil beim Einsatz eines solchen Gerätes liegt darin, dass Gleichspannungen und Wechselspannungen anderer Frequenz und Rauschen effizient gefiltert werden.

Das erfindungsgemäße Verfahren erfordert eine elektrische Leitung von der Laserlichtquelle zu der Auswerteeinheit, um die Leistungs-Modulationsamplitude $\Delta P_{AC}$ des Laserlichtes über den Innenwiderstand Ri der Laserlichtquelle möglichst exakt zu ermitteln. Ist diese bei einem zur Anwendung des vorgeschlagenen neuen Verfahrens vorgesehenen optischen Messsystems nicht vorhanden, so ist eine Hardware-Anpassung erforderlich, ansonsten ist diese Methode nicht anwendbar. Der Aufbau eines optischen Messsystems, das geeignet ist, die Spannung am Innenwiderstand der Laserlichtquelle über eine Spannungsmessung an der Laserlichtquelle zu bestimmen und anschließend daraus die Strom-Modulationsamplitude $\Delta I_{AC\_Act}$ zur Stabilisierung der Wellenlängen-Modulationsamplitude $\Delta\lambda_{AC}$ des Laserlichtes anzupassen, wird später nachfolgend an Hand einer schematischen Darstellung nochmals kurz erläutert.

Die Kalibrierung des optischen Messsystems erfolgt weitgehend nach der üblichen dem Fachmann geläufigen Methode mittels eines bekannten Referenzgases, das als Messgas im regulären Betrieb von dem optischen Messsystems detektiert und dessen Konzentration gemessen werden soll. Zunächst wird für die Festlegung des Arbeitspunktes die Laserlichtquelle mit einem üblichen Grundstrom $I_{DC}$ und Modulationsstrom $I_{AC}$ betrieben und die Temperatur der temperaturstabilisierten Laserlichtquelle solange verändert, bis ein Absorptionssignal für das Referenzgas detektiert wird. Anschließend wird bei der ermittelten Temperatur, die z.B. mittels eines Peltier-Elementes temperaturstabilisiert wird, der Grundstrom $I_{DC}$ mit einem Modulationsstrom $I_{AC}$ strommoduliert, sodass die Laserlichtquelle einen Laserstrahl der Wellenlänge $\lambda_0$ mit einer Wellenlängen-Modulationsamplitude $\Delta\lambda_{AC}$ emittiert. Anschließend kann die Strom-Modulationsamplitude bzw die Wellenlängen-Modulationsamplitude entsprechend diverser Kriterien des Messsystems, beispielsweise optimalem Signal-zu-Rauschen Verhältnis, optimiert werden. Dies ist insbesondere notwendig, da sich die Wellenlängen-Modulationsamplitude $\Delta\lambda_{AC}$ mit dem Grundstrom $I_{DC}$ ändert. Die Wellenlängen-Modulationsamplitude des Laserlichtes nimmt mit steigendem Grundstrom zu, d.h. sie ist unterhalb eines gewählten Arbeitspunktes kleiner als oberhalb des Arbeitspunktes und muss somit für jeden Arbeitspunkt separat festgelegt werden.

Diese grundlegende Vorgehensweise schließt auch die Berücksichtigung von Maßnahmen bei der Wellenlängen-Modulationsspektroskopie ein, die geeignet sind, optische Interferenzphänomene ganz oder teilweise zu unterdrücken. Damit wird die Wellenlängen-Modulationsamplitude bzw. die Strom-Modulationsamplitude basierend auf diversen Kriterien des Messsystems und des zu detektierenden Gases grundlegend festgelegt. Die dementsprechende modulierte Leistung, d.h. die Leistungs-Modulationsamplitude $\Delta P_{AC}$, oder eine äquivalente Größe, wie beispielsweise der Modulationsstrom und die Spannung der Laserlichtquelle wird auch zum Zeitpunkt der Kalibration ermittelt und abgespeichert.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar.

Nachfolgend wird die Erfindung an Hand der beigefügten Zeichnungen nochmals näher erläutert. Es zeigen in schematischer Darstellung:

Figur 1    ein für die Durchführung des erfindungsgemäßen Verfahrens geeignetes optisches Messsystem;

Figur 2    das Ersatzschaltbild für die Laserlichtquelle;

Figur 3    eine aufgenommene Spannungs-Strom-Kennlinie zur Bestimmung des Innenwiderstandes der Laserlichtquelle; und

Figur 4    ein Ablaufschema für die Anpassung der Strom-Modulationsamplitude.

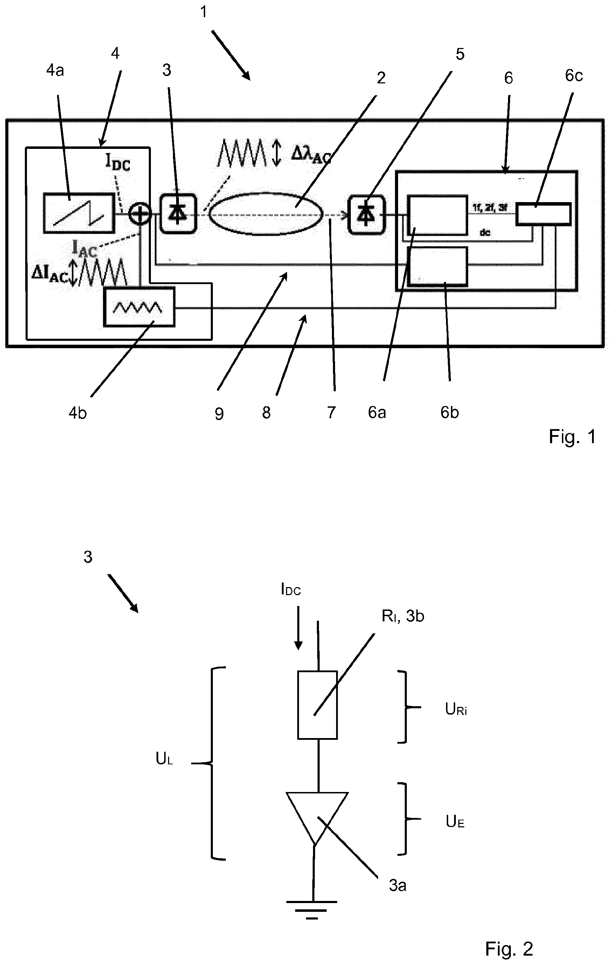

Die Figur 1 zeigt schematisch den prinzipiellen Aufbau eines optischen Messsystems 1 zur Messung der Konzentration einer Gaskomponente in einem Messgas 2, basierend auf der Wellenlängen-Modulationsspektroskopie. Das Messsystem 1 weist eine wellenlängenabstimmbare temperaturstabilisierte Laserlichtquelle 3, eine Modulationseinrichtung 4, einen Lichtdetektor 5, und eine Auswerteeinrichtung 6 auf. Die Laserlichtquelle 3 emittiert einen Laserstrahl 7 der Wellenlänge $\lambda_0$ mit einer Wellenlängen-Modulationsamplitude $\Delta\lambda_{AC}$. Die Modulationseinrichtung 4 variiert die zentrale Basiswellenlänge $\lambda_0$ des Laserlichts der Laserlichtquelle 3 periodisch über eine interessierende Absorptionslinie der Gaskomponente an einem Arbeitspunkt und moduliert diese zudem gleichzeitig dreiecksförmig mit einer Frequenz (f) und einer Amplitude. Sie beinhaltet zudem mindestens eine DC- und/oder AC-Spannungsquelle oder eine DC- und AC-Stromquelle 4a und zugeordnete Modulationsmittel 4b zum Betrieb der Laserlichtquelle 3. Die Modulationseinrichtung 4 ist direkt mit der Laserlichtquelle 3 verbunden. Der Lichtdetektor 5 erfasst den von der Laserlichtquelle 3 ausgehenden Laserstrahl 7, nachdem dieser das Messgas 2 passiert hat, und erzeugt ein Empfangssignal, das von der Intensität des Laserlichtes nach dem Durchtritt durch das Messgas 2 abhängig ist und der Auswerteinheit 6 zugeführt wird. Die Auswerteinheit 6 umfasst Mittel zur phasensensitiven Demodulation eines von dem Lichtdetektor 5 erzeugten Messsignals bei der Frequenz (f) und/oder einer ihrer Harmonischen. Die Auswerteinheit 6 weist zwei Lock-in-Verstärker 6a, 6b und eine Recheneinheit 6c auf. Die Recheneinheit 6c wertet das demodulierte Empfangssignal des Lichtdetektors 5 aus und steuert davon abhängig die Modulationsmittel 4b der Modulationseinrichtung 4, um die Wellenlängen-Modulationsamplitude $\Delta\lambda_{AC}$ des Laserlichtes über eine Anpassung der Strom-Modulationsamplitude $\Delta I_{AC}$ konstant zu halten. Dazu weist sie eine elektrische Steuerleitung 8 zu der Modulationseinrichtung 4 auf. Des Weiteren führt eine elektrische Verbindungsleitung 9 von der Laserlichtquelle 3 zu dem Lock-in-Verstärker 6b, mit der die an der Laserlichtquelle 3 anliegende Spannung erfasst und ausgewertet wird. Bei der Auswertung werden unter anderem die vorstehend aufgeführten Formeln 1 bis 5 verwendet.

Die Figur 2 stellt das Ersatzschaltbild für die Laserlichtquelle 3 dar. Die Laserlichtquelle 3 kann demnach durch einen Lichtemitter 3a und einen dazu seriell angeordneten Innenwiderstand $R_I$, 3b rechnerisch ersetzt werden. Die Laserlichtquelle 3 wird mit einem Grundstrom $I_{DC}$ und einem Modulationsstrom $I_{AC}$ strommoduliert betrieben. An der Laserlichtquelle 3 liegt Spannung $U_L$ an, die jeweils teilweise an dem Innenwiderstand 3b als Teilspannung $U_{Ri}$ und am Lichtemitter 3a als Teilspannung $U_E$ abfällt.

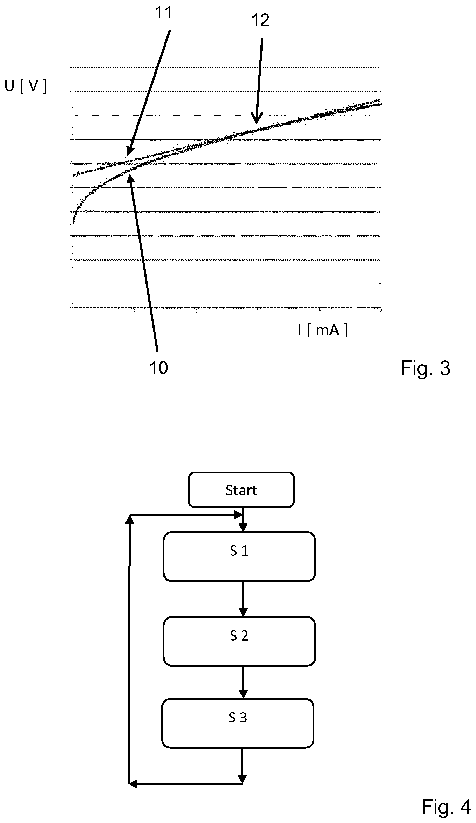

Die Figur 3 veranschaulicht eine bei der Kalibrierung des optischen Messsystems 1 aufgenommene Strom/Spannungskennlinie 10 zur Bestimmung des Innenwiderstandes $R_I$ der Laserlichtquelle 3. Der Innenwiderstand Ri wird aus der Beziehung der Strom-Spannungs-Charakteristik der Laserlichtquelle 3 im Arbeitspunkt 12 bestimmt. Dazu ist die Strom-Spannungs-Kennlinie 10 (durchgezogene Linie) mit linearer Approximationslinie 11 (gestrichelte Linie) im Arbeitspunkt 12 zur Bestimmung des Innenwiderstandes Ri versehen. Die Steigung der Approximationslinie 11 entspricht dem Innenwiderstandes $R_I$, 3b am Arbeitspunkt 12.

Die Figur 4 verbildlicht das Ablaufschema für die Anpassung der Strom-Modulationswerte, wobei die Bestimmung der aktuell modulierten Leistung entweder beim DC-Laserstrom durchgeführt wird, der dem Maximum des Absorptionssignals zugeordnet ist, oder über mehrere DC-Laserstromwerte des Scans der Messung ermittelt wird. In der Regel erfolgen dabei mehrere Scans über die interessierende Absorptionslinie, d.h. die entsprechende zentrale Basiswellenlänge $\lambda_0$ des Laserlichts der Laserlichtquelle wird mehrfach periodisch über die Absorptionslinie der Gaskomponente am Arbeitspunkt 12 variiert und gleichzeitig moduliert, wobei üblicherweise eine Anzahl von Messpunkten aufgenommen und rechnerisch ausgewertet werden. Dabei kann die Strom-Modulationsamplitude für jeden Messpunkt beibehalten werden, oder zur Optimierung des Ergebnisses für den nächsten Messpunkt aus der Berechnung des aktuellen Messpunktes berechnet werden. In dem in der Figur 4 symbolisch gezeigten Verfahrensablauf, der den aktuellen Betrieb des optischen Messsystems wiedergibt, wird in einem ersten Verfahrensschritt S1 die aktuelle modulierte AC-Leistung an dem Innenwiderstand $R_I$ festgestellt. In dem darauf folgenden zweiten Verfahrensschritt S2 wird anschließend der aktuelle Strom-Modulationswert bestimmt. In dem nächsten anschließenden dritten Verfahrensschritt S3 erfolgt danach die eigentliche Konzentrationsmessung für das Messgas mit dem aktuellen Strom-Modulationswert. Die Verfahrensschritte S1 bis S3 werden in einer Schleife mehrfach ausgeführt, wobei zwischen den Verfahrensdurchläufen die Strom-Modulationsamplitude $\Delta I_{AC}$ bei Bedarf angepasst werden kann, wenn der aktuelle Strom-Modulationswert $\Delta I_{AC\_Act}$ von dem idealen Strom-Modulationswert $\Delta I_{AC\_Calib}$ bei der Kalibrierung des optischen Messsystems abweicht und somit die Wellenlängen-Modulationsamplitude $\Delta\lambda_{AC}$ gegenüber der Kalibrierung verändert ist.

**Patentansprüche**

**1.**    Verfahren zum Betreiben eines optischen Messsystems (1) zur Messung der Konzentration einer Gaskomponente in einem Messgas (2), basierend auf der Wellenlängen-Modulationsspektroskopie, mit einer wellenlängenabstimmbaren temperaturstabilisierten Laserlichtquelle (3), welche eine zentrale Basiswellenlänge $\lambda_0$ des Laserlichts der

Laserlichtquelle (3) periodisch über eine interessierende Absorptionslinie der Gaskomponente an einem Arbeitspunkt (12) variiert und gleichzeitig mit einer Frequenz (f) und einer Amplitude mittels einer Modulationseinrichtung (4) moduliert, einem Lichtdetektor (5), der die Intensität des Laserlichtes nach dem Durchtritt durch das Messgas (2) detektiert, und mit einer Auswerteeinrichtung (6), die Mittel (6a) zur phasensensitiven Demodulation eines von dem Lichtdetektor (5) erzeugten Messsignals bei der Frequenz (f) und/oder einer ihrer Harmonischen enthält, wobei die Laserlichtquelle (3) mit einem Grundstrom $I_{DC}$ und einem Modulationsstrom $I_{AC}$ strommoduliert betrieben wird und einen Laserstrahl (7) der Wellenlänge $\lambda_0$ mit einer Wellenlängen-Modulationsamplitude $\Delta\lambda_{AC}$ emittiert und die Wellenlängen-Modulationsamplitude $\Delta\lambda_{AC}$ des Laserlichtes über eine variable Einstellung der Strom-Modulationsamplitude $\Delta I_{AC}$ konstant gehalten wird, **dadurch gekennzeichnet, dass** am Arbeitspunkt (12) die Spannung an der Laserlichtquelle (3) gemessen und darüber eine

modulierte Leistung $\Delta P_{AC}$ an einem Innenwiderstand $R_I$ (3b) der Laserlichtquelle (3) konstant gehalten wird.

2. Verfahren nach Anspruch 1, **dadurch gekennzeichnet, dass** die Strom-Modulationsamplitude $\Delta I_{AC}$ unter Berücksichtigung einer bei der Kalibrierung der Laserlichtquelle eingestellten Strom-Modulationsamplitude $\Delta I_{AC\_Calib}$ derart angepasst wird, dass die modulierte Leistungs-Modulationsamplitude $\Delta P_{AC}$ konstant gehalten wird.

3. Verfahren nach Anspruch 1 oder 2, **dadurch gekennzeichnet, dass** zur Stabilisierung der Wellenlängen-Modulationsamplitude $\Delta\lambda_{AC}$ durch Anpassung der Strom-Modulationsamplitude $\Delta I_{AC}$ die Spannungsänderung $\Delta U_{Ri}$ an dem Innenwiderstand $R_I$ (3b) der Laserlichtquelle (3) bestimmt wird.

4. Verfahren nach Anspruch 3, **dadurch gekennzeichnet, dass** der Anpassung der Strom-Modulationsamplitude $\Delta I_{AC}$ der Quotient aus $U_{L\_Calib}$ und $U_{L\_Act}$ zugrunde gelegt wird.

5. Verfahren nach einem der vorstehenden Ansprüche, **dadurch gekennzeichnet, dass** bei der Kalibrierung des optischen Messsystems (1) die modulierte Leistung $\Delta P_{AC}$ der Laserlichtquelle (3), die Amplitude $\Delta I_{AC}$ des Modulationsstroms $I_{AC}$ und der Spannungsabfall $U_I$ am Innenwiderstand $R_I$ (3b) oder die Amplitude $\Delta I_{AC}$ des Modulationsstroms $I_{AC}$, der Innenwiderstand $R_I$ und der Grundstrom $I_{DC}$ am Arbeitspunkt (12) ermittelt und abgespeichert werden.

6. Verfahren nach einem der vorstehenden Ansprüche, **dadurch gekennzeichnet, dass** der Innenwiderstand $R_I$ (3b) der Laserlichtquelle (3) aus einer Spannung-Strom-Kennlinie der Laserlichtquelle (3) bestimmt wird, bei der der Spannungsabfall $U_L$ an der Laserlichtquelle (3) abhängig von dem Grundstrom $I_{DC}$ aufgenommen ist.

7. Verfahren nach einem der vorstehenden Ansprüche, **dadurch gekennzeichnet, dass** eine Auswerteeinrichtung (6) mit Lock-in-Technik verwendet wird.

**Claims**

1. A method for operating an optical measuring system (1) for measuring the concentration of a gas component in a measured gas (2), based on wavelength modulation spectroscopy, comprising a wavelength-tunable temperature-stabilized laser light source (3), which periodically varies a central base wavelength $\lambda_0$ of the laser light of the laser light source (3) about a relevant absorption line of the gas component at an operating point (12) and, at the same time, modulates the same with a frequency (f) and an amplitude, by way of a modulation device (4), a light detector (5), which detects the intensity of the laser light after it has passed through the measured gas (2), and an evaluation device (6), which comprises means (6a) for the phase-sensitive demodulation of a measuring signal generated by the light detector (5) at the frequency (f) and/or one of the harmonics thereof, the laser light source (3) being operated in a current-modulated manner with a base current $I_{DC}$ and a modulation current $I_{AC}$ and emitting a laser beam (7) of the wavelength $\lambda_0$ having a wavelength modulation amplitude $\Delta\lambda_{AC}$, and the wavelength modulation amplitude $\Delta\lambda_{AC}$ of the laser light being kept constant by way of variable setting of the current modulation amplitude $\Delta I_{AC}$, **characterized in that** the voltage at the laser light source (3) is measured at the operating point (12), and based thereon a modulated power $\Delta P_{AC}$ at an internal resistor $R_I$ (3b) of the laser light source (3) is kept constant.

2. The method according to claim 1, **characterized in that** the current modulation amplitude $\Delta I_{AC}$ is adapted, taking a current modulation amplitude $\Delta I_{AC\_Calib}$ that was set during the calibration of the laser light source into consideration, such that the modulated power modulation amplitude $\Delta P_{AC}$ is kept constant.

3. The method according to claim 1 or 2, **characterized in that** the voltage change $\Delta U_{Ri}$ at the internal resistor $R_I$ (3b) of the laser light source (3) is determined by adapting the current modulation amplitude $\Delta I_{AC}$ so as to stabilize the

wavelength modulation amplitude $\Delta\lambda_{AC}$.

4. The method according to claim 3, **characterized in that** the adaptation of the current modulation amplitude $\Delta I_{AC}$ is based on the quotient of $U_{L\_Calib}$ and $U_{L\_Act}$.

5. A method according to any one of the preceding claims, **characterized in that,** during the calibration of the optical measuring system (1), the modulated power $\Delta P_{AC}$ of the laser light source (3), the amplitude $\Delta I_{AC}$ of the modulation current $I_{AC}$ and the voltage drop $U_I$ across the internal resistor $R_I$ (3b) or the amplitude $\Delta I_{AC}$ of the modulation current $I_{AC}$, the internal resistance $R_I$ and the base current $I_{DC}$ are ascertained at the operating point (12), and stored.

6. A method according to any one of the preceding claims, **characterized in that** the internal resistance $R_I$ (3b) of the laser light source (3) is determined from a voltage/current characteristic curve of the laser light source (3) in which the voltage drop $U_L$ across the laser light source (3) is recorded as a function of the base current $I_{DC}$.

7. A method according to any one of the preceding claims, **characterized in that** an evaluation device (6) comprising lock-in technology is used.

## Revendications

1. Procédé de fonctionnement d'un système de mesure optique (1) pour mesurer la concentration d'un composant gazeux dans un gaz de mesure (2) sur la base de la spectroscopie par modulation de longueur d'onde, avec une source de lumière laser (3) stabilisée en température et accordable en longueur d'onde, qui fait varier périodiquement une longueur d'onde de base centrale $\lambda_0$ de la lumière laser de la source de lumière laser (3) sur une ligne d'absorption intéressante du composant gazeux à un point de fonctionnement (12) et la module simultanément avec une fréquence (f) et une amplitude au moyen d'un dispositif de modulation (4), avec un détecteur de lumière (5) qui détecte l'intensité de la lumière laser après passage à travers le gaz de mesure (2), et avec un dispositif d'évaluation (6) qui contient des moyens (6a) pour la démodulation sensible à la phase d'un signal de mesure généré par le détecteur de lumière (5) à la fréquence (f) et/ou à l'une de ses harmoniques, la source de lumière laser (3) fonctionnant en modulation de courant avec un courant de base $I_{DC}$ et un courant de modulation $I_{AC}$ et émettant un faisceau laser (7) de longueur d'onde $\lambda_0$ avec une amplitude de modulation de longueur d'onde $\Delta\lambda_{AC}$ et l'amplitude de modulation de longueur d'onde $\Delta\lambda_{AC}$ de la lumière laser étant maintenue constante par un réglage variable de l'amplitude de modulation de courant $\Delta I_{AC}$, **caractérisé en ce que** la tension à la source de lumière laser (3) est mesurée au point de fonctionnement (12) et, par ce biais, une puissance modulée $\Delta P_{AC}$ à une résistance interne $R_I$ (3b) de la source de lumière laser (3) est maintenue constante.

2. Procédé selon la revendication 1, **caractérisé en ce que** l'amplitude de modulation de courant $\Delta I_{AC}$ est adaptée, en tenant compte d'une amplitude de modulation de courant $\Delta I_{AC\_Calib}$ réglée lors de l'étalonnage de la source de lumière laser, de telle sorte que l'amplitude de modulation de puissance modulée $\Delta P_{AC}$ soit maintenue constante.

3. Procédé selon la revendication 1 ou 2, **caractérisé en ce que**, pour stabiliser l'amplitude de modulation de longueur d'onde $\Delta\lambda_{AC}$ par adaptation de l'amplitude de modulation de courant $\Delta I_{AC}$ on détermine la variation de tension $\Delta U_{Ri}$ à la résistance interne $R_I$ (3b) de la source de lumière laser (3).

4. Procédé selon la revendication 3, **caractérisé en ce que** l'adaptation de l'amplitude de modulation de courant $\Delta I_{AC}$ est basée sur le quotient $U_{L\_Calib}$ sur $U_{L\_Act}$.

5. Procédé selon l'une des revendications précédentes, **caractérisé en ce que**, lors de l'étalonnage du système de mesure optique (1), la puissance modulée $\Delta P_{AC}$ de la source de lumière laser (3), l'amplitude $\Delta I_{AC}$ du courant de modulation $I_{AC}$ et la chute de tension $U_I$ à la résistance interne $R_I$ (3b) ou l'amplitude $\Delta I_{AC}$ du courant de modulation $I_{AC}$, la résistance interne $R_I$ et le courant de base $I_{DC}$ au point de fonctionnement (12) sont déterminés et mémorisés.

6. Procédé selon l'une des revendications précédentes, **caractérisé en ce que** la résistance interne $R_I$ (3b) de la source de lumière laser (3) est déterminée à partir d'une caractéristique tension-courant de la source de lumière laser (3), dans laquelle la chute de tension $U_L$ sur la source de lumière laser (3) est enregistrée en fonction du courant de base $I_{DC}$.

7. Procédé selon l'une des revendications précédentes, **caractérisé en ce que** l'on utilise un dispositif d'évaluation (6) à détection synchrone.

$I_{DC}$

$\Delta\lambda_{AC}$

$I_{AC}$

$\Delta I_{AC}$

1f, 2f, 3f

dc

**Fig. 1**

3

$I_{DC}$

$R_I$, 3b

$U_{Ri}$

$U_L$

$U_E$

3a

**Fig. 2**

11

U [ V ]

I [ mA ]

Fig. 3

Start

S 1

S 2

S 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4110095 A1
- DE 102013202289 A1

- EP 2848918 A1
- EP 2610608 B1